(19) Europäisches Patentamt
European Patent Office
Office européen des brevets

(11) **EP 2 485 829 B1**

(12) **FASCICULE DE BREVET EUROPEEN**

(45) Date de publication et mention
de la délivrance du brevet:
**16.05.2018 Bulletin 2018/20**

(21) Numéro de dépôt: **10781931.0**

(22) Date de dépôt: **07.10.2010**

(51) Int Cl.:
***B01D 65/00*** *(2006.01)*     ***B01D 63/08*** *(2006.01)*

(86) Numéro de dépôt international:
**PCT/FR2010/000677**

(87) Numéro de publication internationale:
**WO 2011/042627 (14.04.2011 Gazette 2011/15)**

(54) **INSERT DE DIFFUSION POUR L'ANALYSE DE MEMBRANE, KIT CELLULE ET PROCEDE DE DIFFUSION**

DIFFUSIONSEINSATZ FÜR MEMBRANALYSE, KIT, ZELLE UND DIFFUSIONSVERFAHREN

DIFFUSION INSERT FOR MEMBRANE ANALYSIS, KIT, CELL, AND DIFFUSION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2009 FR 0904842**

(43) Date de publication de la demande:
**15.08.2012 Bulletin 2012/33**

(73) Titulaires:
• **Université de Franche-Comté
25000 Besançon (FR)**
• **Centre Hospitalier Universitaire
25000 Besancon (FR)**

(72) Inventeurs:
• **LBOUTOUNE , Youssef
F-25000 Besancon (FR)**
• **HUMBERT, Philippe
F-25290 Ornans (FR)**
• **BINDA, Delphine
F-25870 Auxon Dessous (FR)**
• **PAZART, Lionel
F-25000 Besancon (FR)**

(74) Mandataire: **Oudin, Stéphane
JurisPatent - Cabinet Guiu
10, rue Paul Thénard
21000 Dijon (FR)**

(56) Documents cités:
**EP-A1- 0 596 482     WO-A1-2004/029338
US-A1- 2005 063 862     US-B1- 6 217 772**

**Description**

Domaine technique

La présente invention concerne un insert de diffusion pour l'analyse de membrane, un kit, une cellule, et un procédé de diffusion permettant notamment de réaliser des mesures de pénétration transmembranaire.

On entend par l'expression « analyse de membrane » tout type d'analyse dans ou au travers de membranes telle que notamment la pénétration de molécules ou substances dans ou au travers de membrane. De telles membranes peuvent être artificielles ou naturelles telles que par exemple des épithéliums provenant de tout type d'organisme vivant, biologique ou non, cutanés ou non. Plus particulièrement, l'expression « molécules ou substances » est employée pour désigner toute molécule naturelle, synthétique ou semi-synthétique, ainsi que les groupements de molécules non forcément identiques, ces molécules étant dans une phase liquide, semi-liquide, semi-solide, gazeuse ou vapeur. L'expression « molécules ou substances » est également employée pour désigner tout agent biologique comme des virus, des toxines, des débris bactériens, des médiateurs cellulaires, des chemokines, des cytokines, ou encore des facteurs de croissance.

Technique antérieure

Les cellules de diffusion telles que les cellules de Franz (Franz T.J, J Invest Dematol, 64 : 190-195; 1975) sont couramment utilisées, notamment pour déterminer la pénétration cutanée de substances exogènes. Les cellules de Franz sont principalement constituées d'un compartiment donneur superposé à un compartiment récepteur, les compartiments donneur et récepteur étant séparés par une barrière formée par une membrane cutanée. Le compartiment donneur est destiné à recevoir une solution donneuse contenant les molécules à étudier et le compartiment récepteur est destiné à recevoir une solution réceptrice destinée à collecter ce qui aura traversé la membrane cutanée. De manière connue, les compartiments donneur et récepteur comportent des rainures circulaires prévues, en regard l'une de l'autre, dans l'épaisseur de leurs parois destinées à être en contact avec la membrane cutanée. Ces rainures circulaires sont aptes à recevoir la périphérie de la membrane cutanée et un jonc bloquant la membrane cutanée afin de la tendre entre les compartiments donneur et récepteur. La membrane cutanée ainsi tendue et bloquée, présente une surface « utile » qui peut alors être exposée à des molécules placées dans la solution donneuse. A intervalle de temps régulier, la solution réceptrice est prélevée afin de doser les molécules qui ont traversé la membrane cutanée et une nouvelle solution réceptrice lui est alors substituée. Pour ce faire, le compartiment récepteur est pourvu d'un ou de plusieurs conduits permettant l'alimentation et le prélèvement de la solution réceptrice.

Au moyen de cette technique, le dosage de substances présentes dans la solution réceptrice prélevée permet à la fois de déterminer la quantité de molécules ayant traversé la membrane cutanée et le flux de pénétration exprimé en nano gramme/cm$^2$/heure.

En pratique, avant d'utiliser les cellules de Franz pour mesurer la pénétration cutanée, on procède aux différentes étapes successives suivantes :

a) on récupère de la peau issue de déchets post opératoires (bloc opératoire),
b) on dégraisse la peau récupérée en élimination le tissu adipeux (couche hypodermique),
c) on ajuste l'épaisseur des lambeaux de peau en utilisant un Dermatome permettant d'obtenir une membrane cutanée d'épaisseur calibrée,
d) on découpe des sections circulaires ayant un diamètre prédéterminé,
e) on contrôle l'épaisseur de chaque membrane cutanée.

Entre les étapes b) et c), les lambeaux de peau peuvent être conservés, congelées à une température de - 20°C pendant une période de 6 à 12 mois. Une fois l'étape e) réalisée, les membranes cutanées circulaires, d'épaisseur prédéfinie, peuvent être individuellement déposées sur une cellule de Franz. La face profonde du derme est orientée vers la solution réceptrice prévue dans le compartiment récepteur et est censée remplacer le liquide interstitiel de la peau. Le montage ainsi obtenu est maintenu en position au moyen d'une pince adaptée pour serrer le compartiment donneur contre le compartiment récepteur, coinçant ainsi la membrane cutanée tenue par le jonc. L'ensemble est laissé au repos pendant 90 à 120 minutes afin de s'équilibrer avec le milieu ou l'atmosphère environnant. L'intégrité de la membrane cutanée est enfin vérifiée au moyen d'un Tewametre avant la mise en oeuvre du test de pénétration à proprement parlé.

Ces opérations de préparation et de montage sont fastidieuses à réaliser, répétitives et nécessitent beaucoup de temps de manipulation ce qui rallonge d'autant les délais de réalisation de ces analyses.

De plus, il est fréquent, lors de la préparation des mesures, qu'il se forme une bulle d'air, située sous la membrane cutanée. Lorsque la bulle d'air est détectée par l'opérateur, elle doit être évacuée de la surface de la membrane cutanée en faisant pivoter la cellule de diffusion pour guider la bulle d'air vers l'embouchure du conduit du compartiment récepteur. Cette étape supplémentaire est source de perte de temps. De plus elle est mal pratique à réaliser. Lorsque la bulle d'air n'est pas détectée, les résultats de la mesure de la pénétration transmembranaire sont faussés. En effet, dans ce cas, toute la surface « utile » de la membrane n'est pas utilisée et donc l'interprétation des résultats est impossible.

Par ailleurs, lors de l'étape a) de récupération de la peau, on prélève sur un corps un lambeau de peau comportant une zone de mesure destinée à servir pour la mesure de la pénétration transmembranaire. Avant le prélèvement, la zone de mesure a une surface de référence in-vivo. Lors du prélèvement et après, le lambeau de peau tend à se rétracter de sorte que la surface de la zone de mesure diminue pour atteindre une première surface rétractée ex-vivo. Après l'étape d), étape au cours de laquelle on découpe une section circulaire dans le lambeau de peau, la section circulaire comportant la zone de mesure tend à se rétracter de sorte que la surface de la zone de mesure diminue une nouvelle fois pour atteindre une seconde surface rétractée ex-vivo. Enfin, une fois montée sur la cellule de Frantz, la section circulaire du lambeau de peau présente une surface finale de mesure. Afin d'obtenir des résultats de diffusion fiables, il est primordial de pouvoir corréler la surface finale de mesure et la surface de référence in-vivo. Or les dispositifs connus ne permettent pas d'obtenir cette corrélation.

Le document EP0596482 décrit un appareil d'essais à cavités multiples pour la dialyse. Les cavités multiples d'une partie inférieure sont couvertes par une membrane et une partie supérieure avec des cavités complémentaires est placée au dessus, tel que la membrane est tendue est retenue par friction entre les deux parties complémentaires.

Le document US2005/063862 décrit un appareil d'essais à cavités multiples pour la diffusion. Les cavités multiples d'une partie inférieure sont couvertes par une membrane. La membrane est lissée puis fixée par une plaque avec des orifices correspondants aux cavités. Une partie supérieure avec des cavités complémentaires est placée au-dessus. Les cavités des parties inférieure et supérieure ont des formes coniques correspondantes, tel que la membrane est tendue et déformée. Une autre option permet de fixer la membrane et le plaque à la partie supérieure. Mais la membrane n'est pas placée dans la cupule du compartiment donneur.

Les documents US621772 et WO2004/029338 décrivent un compartiment donneur pour la dialyse, dans lequel la membrane est placée, suivi par un joint et un élément cylindrique qui presse contre le joint et fixe la membrane. L'élément cylindrique et le compartiment donneur sont pourvus de formes d'emboitement complémentaires, soit un filetage, soit une nervure rainure.

WO 2004/086004 décrit une cellule de diffusion. La membrane est justement coincée et forme le fond du compartiment donneur.

Exposé de l'invention

La présente invention vise à remédier à ces inconvénients et propose un insert de diffusion, un kit de diffusion, une cellule de diffusion, et un procédé de diffusion permettant notamment de réaliser des analyses de pénétration transmembranaire de manière plus rapide et plus aisée tout en augmentant la fiabilité des résultats et permettant de corréler la surface finale de mesure et la surface de référence in-vivo afin que les résultats obtenus soient représentatifs et interprétables de manière fiable et reproductible.

L'invention concerne tout d'abord un insert de diffusion selon la revendication 1. L'insert de diffusion est notamment pour le maintien d'une membrane, cet insert de diffusion comportant au moins une cupule définissant un compartiment donneur axial destiné à recevoir une solution donneuse, la cupule ayant une forme globalement cylindrique pourvue d'un retour radial dont la partie intérieure définit une surface d'appui radiale apte à recevoir l'appui de la périphérie de la membrane disposée dans la cupule, le retour radial définissant au moins un orifice axial cylindrique destiné à être obturé par la partie centrale de la membrane, l'insert de diffusion comportant au moins :

- un élément de pincement apte à être logé dans la cupule, au-dessus de la membrane et à coopérer avec la cupule pour pincer la périphérie de la membrane,
- des moyens de blocage agencés pour bloquer au moins axialement l'élément de pincement par rapport à la cupule, et,
- un élément de déformation comportant une surface de déformation axiale apte à déformer la membrane axialement et radialement et à coopérer avec l'élément de pincement pour tendre au moins radialement la membrane par rapport à la surface de pincement, l'élément de déformation étant apte à coopérer avec la cupule pour préserver un dégagement latéral radial directement tangent à la surface de déformation de l'élément de déformation recouvert de la membrane tendue, remarquable en ce qu'il comporte au moins un élément de rappel prévu entre l'élément de pincement et l'élément de blocage, déformable élastiquement entre un état « au repos » dans lequel il ne tend pas à éloigner l'élément de pincement de l'élément de blocage et un état « fléchi » dans lequel il tend à éloigner l'élément de pincement de l'élément de blocage pour solliciter, déformer et tendre radialement la membrane de manière contrôlée.

Cet insert de diffusion permet de préparer à l'avance un stock de membranes. Lorsqu'une analyse est demandée, on dispose donc d'un stock de membranes prêtes à l'emploi. Les temps de préparation des membranes sont donc masqués d'où un délai de réalisation des analyses de pénétration transmembranaire largement raccourci. Les étapes de préparation peuvent également être concentrées de manière à être réalisées par du personnel dédié, laissant à d'autres personnes de qualifications différentes la responsabilité des analyses de pénétration transmembranaire.

Le dégagement latéral permet, lors de l'utilisation de l'insert dans une cellule de diffusion, d'éviter le problème de bulle d'air. Les résultats obtenus à l'issue de l'analyse de pénétration transmembranaire sont donc exploitables sans aucune suspicion d'erreur liée à la présence d'une éventuelle bulle d'air.

Cet insert de diffusion permet en particulier de tendre la membrane de manière contrôlée et reproductible pour obtenir des mesures fiables et des résultats interprétables. Il est décrit que l'insert de diffusion comporte un anneau de maintien définissant au moins l'élément de pincement et l'élément de déformation, l'anneau de maintien comportant au moins un décrochement latéral délimitant une première couronne de dimensions supérieures à celles de l'orifice axial, et une seconde couronne axialement distante de la première couronne et de dimensions inférieures à celles de l'orifice axial pour pouvoir le traverser, la face inférieure de la première couronne définissant la surface de pincement, l'extrémité de la seconde couronne étant circulaire et continue et définissant l'élément de déformation.

La membrane peut ainsi être placée de sorte que sa surface de mesure, tendue sur la couronne de déformation, soit directement tangente à un dégagement latéral permettant l'évacuation spontanée d'une bulle d'air éventuellement formée sous la membrane lors de son montage sur l'insert de diffusion.

De manière avantageuse, la cupule et l'élément de pincement, sont respectivement pourvus de formes d'emboîtement complémentaires destinées à coopérer entre-elles pour former lesdits moyens de blocage. La membrane peut ainsi être solidarisée de manière fiable à la cupule entre l'élément de pincement et la cupule.

Les formes d'emboîtement complémentaires sont choisies dans le groupe comprenant au moins un filetage extérieur et un filetage intérieur aptes à s'emboîter, au moins une nervure et au moins une rainure aptes à s'emboîter. Lesdits moyens de blocage comportent au moins un anneau logé dans la cupule.

L'élément de pincement, les moyens de blocage, l'élément de déformation et l'élément de rappel peuvent avantageusement être formés d'une pièce unique.

L'élément de rappel est formé par une languette déformable élastiquement, inclinée par rapport à l'axe de l'insert de diffusion et définie par sa hauteur r, mesurée parallèlement à l'axe de l'insert de diffusion, par sa longueur R mesurée en suivant son inclinaison et par l'angle $\theta$ entre sa hauteur r et sa longueur R.

L'insert de diffusion est facile à préparer et à utiliser. Il permet la préparation à l'avance et en nombre d'inserts de diffusion membranaires prêts à l'usage. Il autorise néanmoins la préparation d'inserts de diffusion juste avant usage. L'invention concerne également un kit de diffusion selon la revendication 6 comprenant en outre un insert de diffusion selon la revendication 1.

Il est décrit un kit de diffusion comportant un boitier pourvu d'un fond et d'un couvercle aptes à se refermer l'un sur l'autre pour définir au moins un logement de stockage. Ce kit de diffusion est remarquable en ce qu'il contient, dans son logement de stockage, au moins un insert de diffusion tel que décrit précédemment, le boîtier étant pourvu d'au moins une entretoise, apte à recevoir la cupule de manière à préserver un espace libre entre la surface de déformation et le fond du boîtier. Les inserts de diffusion peuvent ainsi être conservés pour stockage ou transport, sans risque de détérioration de la membrane.

Le kit de diffusion permet de stocker un ou des inserts de diffusion rassemblés dans un même boîtier. Les conditions de préparation et les caractéristiques des membranes maintenues dans les inserts de diffusion peuvent être résumées sur une étiquette collée au boîtier et permettant l'identification rapide et fiable des inserts de diffusion.

L'invention concerne également une cellule de diffusion notamment pour l'analyse de pénétration transmembranaire, selon la revendication 7. La cellule de diffusion comporte au moins un compartiment récepteur destiné à recevoir une solution réceptrice, au moins un conduit relié au compartiment récepteur. Cette cellule de diffusion est remarquable en ce qu'elle comporte des moyens de fixation d'au moins un insert de diffusion tel que décrit précédemment, les moyens de fixation étant agencés pour que la membrane soit au moins en contact avec, ou immergée dans, la solution réceptrice, le compartiment récepteur et les moyens de fixation étant agencés pour ménager un espace libre latéral radial tangent au dégagement latéral radial de l'insert de diffusion.

La cellule de diffusion ainsi construite facilite l'évacuation spontanée de toute bulle d'air qui se serait éventuellement formée sous la membrane. De plus, cette cellule de diffusion autorise le montage facile et rapide des inserts de diffusion, limitant donc les temps de manipulation.

Le fond du compartiment récepteur est avantageusement agencé pour présenter un profil incliné définissant une zone de profondeur maximale de la solution réceptrice. On peut donc prélever de manière précise la solution réceptrice au point le plus bas du compartiment récepteur, en étant assuré de prélever la quantité maximale de solution réceptrice contenant les molécules à quantifier.

La cellule de diffusion peut en outre comporter des moyens de réglage agencés pour adapter au moins l'espace séparant le fond de la membrane en fonction de la hauteur de solution réceptrice contenu dans le compartiment récepteur. La cellule de diffusion peut ainsi servir à différentes campagnes de mesures de volumes différents sans nécessiter de matériel supplémentaire. Ces moyens de réglage peuvent également permettre de régler l'inclinaison du fond.

L'invention concerne enfin un procédé de mesure de la pénétration transmembranaire d'une membrane selon la revendication 10 au cours duquel on utilise un insert de diffusion selon la revendication 1.

Un élément de rappel est choisi en fonction de son coefficient de rétraction $\alpha$(insert) et de la surface de déformation de l'élément de déformation.

Description sommaire des dessins

- La figure 1A est une vue en élévation schématique d'une portion de corps comportant une zone de prélèvement d'un lambeau de peau avec une zone de mesure dont on veut se servir pour mesurer la pénétration transmembranaire de la peau au moyen d'un insert de diffusion selon l'invention ;

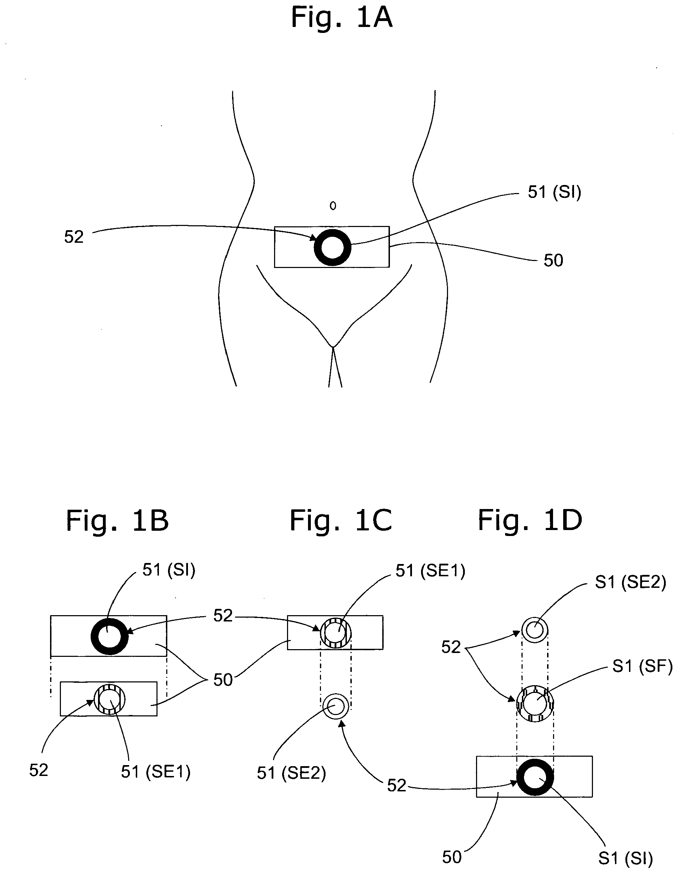

- Les figures 1B à 1D sont des vues de détails illustrant les étapes de prélèvement de la membrane, la partie haute de la figure 1B correspond à un détail de la figure 1A avant prélèvement du lambeau de peau, les parties basse et haute respectivement des figures 1B et 1C sont identiques entre-elles et représentent le lambeau de peau après prélèvement, les parties basse et haute respectivement des figures 1C et 1D représentent la membrane après sa découpe dans le lambeau de peau, la partie médiane de la figure 1D représente la membrane une fois montée sur l'insert de diffusion superposée à la membrane de la partie basse de la figure 1B, et la partie basse de la figure 1D est identique à la partie haute de la figure 1B pour illustrer la corrélation entre les surfaces de la zone de mesures avant prélèvement et lors de la mesure de pénétration transmembranaire avec l'insert de diffusion selon l'invention ;
- Les figures 2A et 2B sont des sections d'un premier mode de réalisation de l'insert de diffusion selon l'invention, cet insert de diffusion comportant un élément de rappel et étant représenté respectivement avant et après mise en tension de la membrane ;
- Les figures 3A et 3B sont des sections d'un second mode de réalisation de l'insert de diffusion selon l'invention, cet insert de diffusion comportant un élément de rappel et étant représenté respectivement avant et après mise en tension de la membrane ;
- La figure 4 est une section d'un kit de diffusion selon l'invention comportant deux insert de diffusion de la figure 2B ;
- La figure 5 est une section d'une cellule de diffusion selon l'invention comportant un insert de diffusion de la figure 2B.

Description des modes de réalisation

Les figures 1A à 1D illustrent un exemple de mode opératoire de préparation d'une membrane de peau biologique pour effectuer dessus une mesure de pénétration transmembranaire.

Lors d'une première étape illustrée par les figures 1A et 1B, on récupère un lambeau de peau 50, par exemple en le prélevant par abdominoplastie sur un corps. On choisit un lambeau de peau 50 dont une zone, appelée zone de mesure 51, est destinée à servir pour la mesure de la pénétration transmembranaire et autour de laquelle on découpe ultérieurement une section cylindrique 52 de dimensions supérieures à celles de la zone de mesure 51. La différence de dimensions entre la section cylindrique 52 et la zone de mesure 51 est représentée par une zone noire sur les figures 1A et la partie de la figure 1B illustrant le lambeau de peau 50 avant prélèvement. Avant le prélèvement du lambeau de peau 50, la zone de mesure 51 a une surface de référence in-vivo SI, indiquée pour plus de clarté entre parenthèses sur les figures 1A et 1B, à côté de la référence 51 de la zone de mesure correspondante. Comme illustré par la figure 1B, pendant et après le prélèvement du lambeau de peau 50, celui-ci tend à se rétracter. La surface de la zone de mesure 51 diminue pour atteindre une première surface rétractée ex-vivo SE1, inférieure à la surface de référence in-vivo SI et indiquée pour plus de clarté entre parenthèses sur les figures 1B et 1C, à côté de la référence 51 de la zone de mesure correspondante. La rétractation du lambeau de peau 50 est mise en évidence par les traits mixtes fins s'étendant du lambeau de peau 50 représenté en partie haute de la figure 1B et celui représenté en partie basse de la figure 1B.

On appelle $\alpha$(in vivo) le premier coefficient de rétraction entre la surface de référence in-vivo SI et la première surface rétractée ex-vivo SE1, définit par le rapport de la différence entre [(la surface de référence in-vivo SI) et (la surface rétractée ex-vivo SE1)] par (la surface de référence in-vivo SI), à savoir :

```
α(in vivo)=(SI - SE1) / SI

On a donc : SE1 = SI (1- α(in vivo)) --- (relation R1)
```

Lors d'une seconde étape illustrée par la figure 1C, on découpe la section circulaire 52 dans le lambeau de peau 50. Cette section circulaire 52 a une surface supérieure à celle de la zone de mesure 51. Pendant et après cette découpe, la section circulaire 52 tend à se rétracter de sorte que la surface de la zone de mesure 51 diminue une nouvelle fois pour atteindre une seconde surface rétractée ex-vivo SE2, inférieure à la première surface rétractée ex-vivo SE1 et à la surface de référence in-vivo SI. La seconde surface rétractée ex-vivo SE2 est indiquée pour plus de clarté entre parenthèses sur les figures 1C et 1D, à côté de la référence 51 de la zone de mesure correspondante.

On appelle α(intermédiaire), noté α(int.) le second coefficient de rétraction entre la première surface rétractée ex-vivo SE1 et la seconde surface rétractée ex-vivo SE2, défini par le rapport de la différence entre [(la première surface rétractée ex-vivo SE1) et (la seconde surface rétractée ex-vivo SE2)] par (la première surface rétractée ex-vivo SE1), à savoir :

```
α(int.))=(SE1 - SE2) / SE1

On a donc : SE2 = SE1 (1- α(int.)) --- (relation R2)
```

Enfin, une fois montée sur la cellule de Frantz, comme illustrée en partie centrale de la figure 1D, la section circulaire 52 du lambeau de peau 50 est étirée par l'insert de diffusion 1 sur lequel elle est montée de manière à présenter une surface finale de mesure SF supérieure à la seconde surface rétractée ex-vivo SE2 et indiquée pour plus de clarté entre parenthèses sur la figure 1D, à côté de la référence 51.

On appelle α(insert) le coefficient de rétraction entre la seconde surface rétractée ex-vivo SE2 et la surface de référence in-vivo SI, définit par le rapport de la différence entre [(la surface de référence in-vivo SI) et (la seconde surface rétractée ex-vivo SE2)] par (la surface de référence in-vivo SI), à savoir :

```
α(insert)=(SI - SE2) / SI = 1 - (SE2/SI) --- (relation R3)
```

En combinant les relations R1 et R2, on obtient l'égalité suivante :

```
SE2=SI (1- α(in vivo)) (1- α(int.) --- (relation R4)
```

En combinant les relations R3 et R4, on obtient l'égalité suivante :

```
α(insert)= 1 - [(1- α(in vivo)) (1- α(int.))]

--- (relation R5)
```

Afin d'obtenir des résultats de diffusion fiables, il est primordial de pouvoir corréler la surface finale de mesure SF et la surface de référence in-vivo SI. Or les dispositifs connus ne permettent pas cette corrélation et, comme détaillé plus loin, l'insert de diffusion 1. La figure 1D permet de visualiser les différences notamment entre la surface de référence in-vivo SI, la seconde surface rétractée ex-vivo SE2 et la surface finale de mesure SF. L'invention permet, connaissant le premier coefficient de rétraction entre la surface de référence in-vivo SI et la première surface rétractée ex-vivo SE1 : α(in vivo), et le second coefficient de rétraction entre la première surface rétractée ex-vivo SE1 et la seconde surface rétractée ex-vivo SE2 : α(int.), de connaitre le coefficient de rétractabilité de l'insert de diffusion : α(insert) à utiliser et donc de choisir de manière adaptée l'insert de diffusion selon l'invention afin que les résultats soit interprétables et les mesures reproductibles. En effet, en fonction de la membrane choisie, on connait le premier coefficient de rétraction α(in vivo) et le second coefficient de rétraction α(int.). Il convient alors de choisir l'insert de diffusion en conséquence.

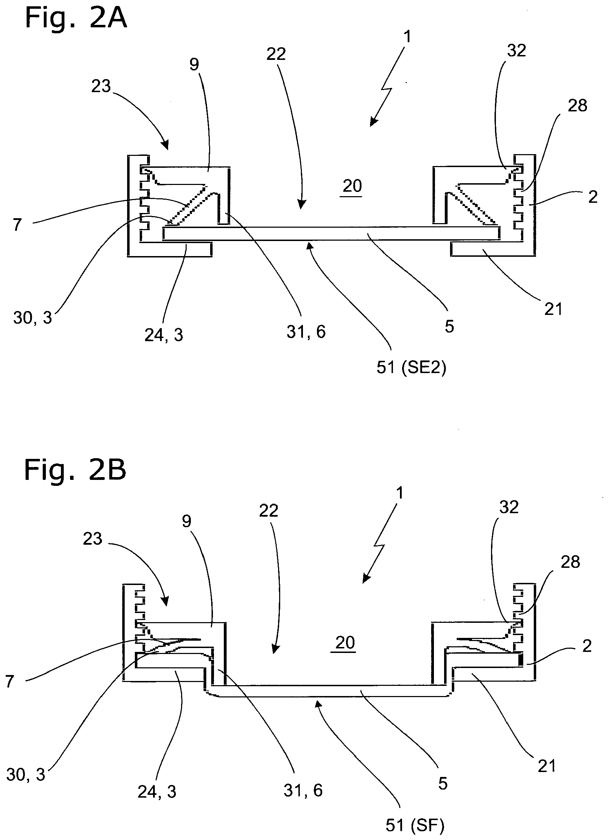

En référence aux figures 2A et 2B, l'insert de diffusion 1, selon le premier mode de réalisation, comporte une cupule 2, un élément de pincement 3, un élément de blocage 4, un élément de déformation 6 et une membrane 5. Cet insert de diffusion 1 comporte de plus un élément de rappel 7 prévu entre l'élément de pincement 3 et des moyens de blocage et tendant à les éloigner l'un de l'autre afin de tendre la membrane 5 de manière contrôlée et reproductible.

La cupule 2 a une forme globalement cylindrique et définit un compartiment donneur 20 destiné à recevoir une solution donneuse (non représentée). La cupule 2 a une forme globalement cylindrique pourvue dans sa partie inférieure d'un retour 21 définissant un orifice axial 22 cylindrique dont la face supérieure définit une surface d'appui 24 sur laquelle la membrane 5 est posée. L'orifice axial 22 est ainsi obturé par la membrane 5. La partie supérieure de la cupule 2 comporte une ouverture 23 qui peut être pourvue d'un couvercle (non représenté). La cupule 2 reçoit, dans le compartiment donneur 20, un anneau d'engagement 9 destiné à bloquer la membrane 5, à la déformer et à tendre sa surface « utile ».

Comme détaillé plus loin, l'anneau d'engagement 9 forme l'élément de pincement 3 et l'élément de déformation 6. Les dimensions extérieures de l'anneau d'engagement 9 sont inférieures aux dimensions intérieures de l'ouverture 23 pour permettre l'insertion de l'anneau d'engagement 9 dans la cupule 2, par le dessus de la membrane 5 disposée au fond de la cupule 2.

L'anneau d'engagement 9 est pourvu d'une nervure 32, s'étendant vers l'extérieur, de préférence circulaire et destinée à coopérer avec des rainures 28 prévues dans la cupule 2. La nervure 32 est prévue élastiquement déformable afin qu'elle puisse se déformer pour passer d'une rainure 28 à une autre. L'anneau d'engagement 9 peut ainsi être déplacé axialement dans la cupule 2 entre une position « au repos » (représentée à la figure 2A) dans laquelle la membrane 5 n'est pas ou peu sollicitée dans laquelle la zone de mesure a une seconde surface rétractée ex-vivo SE2 et une position « d'utilisation » (représentée à la figure 2B) dans laquelle la membrane 5 est tendue et déformée pour présenter une surface finale de mesure SF. Dans chacune de ces positions, l'anneau d'engagement 9 est bloqué axialement dans la cupule 2 par la nervure 32 logée dans une des rainures 28. La nervure 32 et les rainures 28 définissent ainsi l'élément de blocage 4. Comme décrit ultérieurement en référence aux figures 9A et 9B, les rainures 28 et la nervure 32 peuvent être remplacées par des filetages.

Dans sa partie inférieure, l'anneau d'engagement 9 est pourvu d'un prolongement axial formant une couronne de déformation 31 définissant l'élément de déformation 6. Cette couronne de déformation 31 a un diamètre extérieur inférieur au diamètre intérieur de l'orifice axial 22 pour permettre son insertion dans l'orifice axial 22. De plus, la couronne de déformation 31 a une hauteur supérieure à l'épaisseur du retour 21. Ainsi, lorsque l'anneau d'engagement 9 est dans sa position « d'utilisation », logé au fond de la cupule 2, la couronne de déformation 31 traverse l'orifice axial 22 jusqu'à dépasser sous la cupule 2.

L'anneau d'engagement 9 est également pourvu d'une languette 7 flexible, inclinée par rapport à l'axe de l'anneau d'engagement 9 et formant l'élément de rappel 7. Cette languette 7 est de préférence circulaire et continue le long de la périphérie de l'anneau d'engagement 9. Dans une variante de réalisation non représentée, la languette est discontinue et composée de plusieurs tronçons pouvant fléchir indépendamment les uns des autres. La languette 7 est destinée à prendre appui sur la périphérie de la membrane 5 pour la plaquer contre la surface d'appui 24 et forme donc une surface de coincement 30 définissant l'élément de pincement 3. Cette languette 7 est déformable élastiquement entre un état « au repos » (représenté à la figure 2A), dans laquelle la zone de mesure 51 a une surface correspondant à la seconde surface rétractée ex-vivo SE2, et un état « fléchi » (représenté à la figure 2B) dans laquelle la zone de mesure 51 a une surface correspondant à la surface finale de mesure SF. Pour ce faire, on choisit un insert de diffusion dont la languette 7 permet que la relation 5 soit vérifiée avec la membrane choisie.

Pour coincer, tendre et déformer la membrane 5, on visse l'anneau d'engagement 9 dans la cupule 2. Ce vissage a pour effet de déformer élastiquement la languette 7 en élargissant la surface de coincement 30 et en rapprochant la couronne de déformation 31 de la membrane 5. Après son déplacement axial, lorsque l'anneau d'engagement 9 est dans sa position « d'utilisation », la languette 7 est dans son état « fléchi » et la membrane 5, coincée entre la languette 7 et la surface d'appui 24, est tendue par l'élargissant du diamètre de la surface de coincement 30 définie par la languette 7. De plus, la membrane 5 est déformée par l'appui de la couronne de déformation 31. Ainsi, la membrane 5 présente alors une surface finale de mesure SF plane et tendue. La tension de la membrane 5 augmente avec l'insertion de l'anneau de maintien 3 dans la cupule 2. La couronne de déformation 31, recouverte par la membrane 5, est la zone la plus basse de l'insert de diffusion 1 et est entourée par un dégagement latéral circulaire permettant l'évacuation spontanée d'une éventuelle bulle d'air formée sous la surface « utile » tendue de la membrane 5, fiabilisant l'interprétation des mesures comme décrit précédemment.

La languette 7, comme tout élément de rappel élastique, est caractérisé par une raideur. De manière géométrique, la languette 7 est caractérisée par sa hauteur r, mesurée parallèlement à l'axe de l'anneau d'engagement 9, par sa longueur R mesurée en suivant son inclinaison et par l'angle θ entre sa hauteur r et sa longueur R. On peut ainsi prévoir un jeu d'insert ayant des caractéristiques différentes, notamment des raideurs différentes permettant de présenter des coefficients de rétraction α(insert) différents permettant de répondre aux différentes configurations possibles et dépendants de l'angle θ, de la hauteur r et de la longueur R et de la raideur de la languette 7. Chaque insert de diffusion est donc caractérisé par son coefficient de rétraction α(insert) et la surface finale de mesure SF définie par la surface de surface de déformation 31.

La construction particulière de l'insert de diffusion 1 des figures 2A et 2B permet en outre de pré-monter l'insert de diffusion 1, l'anneau d'engagement 9 n'étant pas vissé à fond dans la cupule 2, la membrane 5 étant non ou peu tendue ce qui permet de prolonger la durée pendant laquelle elle peut être conservée avant utilisation.

Dans une variante de réalisation non représentée, l'insert de diffusion comporte des moyens de mesure des propriétés physico-chimiques de la membrane et des moyens de caractérisation de la membrane. A cet effet, l'élément de blocage peut être pourvu de capteurs ou de sondes de mesures par exemple d'humidité, de température, de PH, de courant, de tension ou de toute autre mesure physique ou chimique.

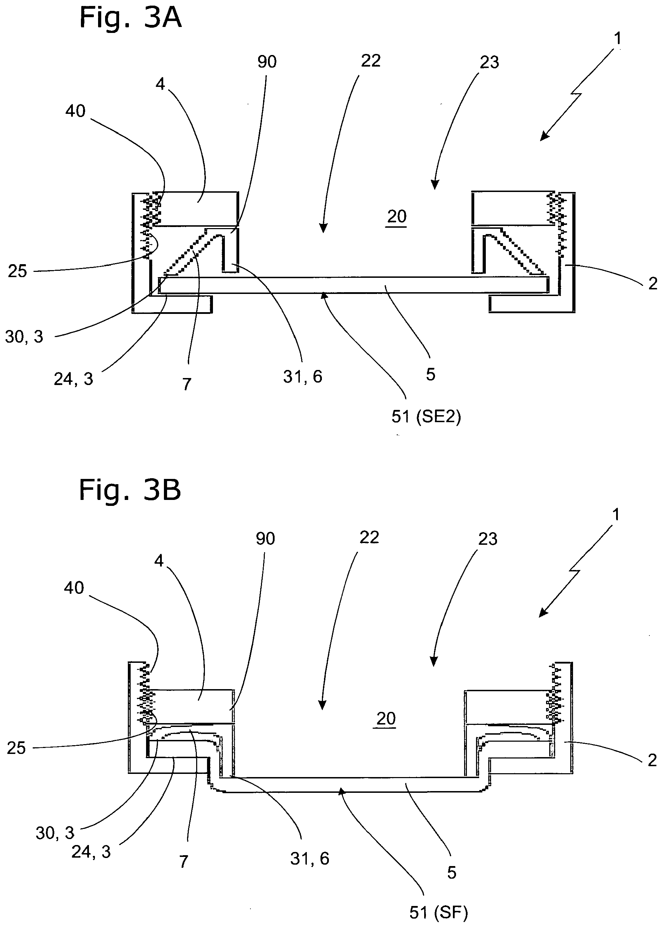

En référence aux figures 3A et 3B, selon un second mode de réalisation, l'insert de diffusion 1 est sensiblement similaire à celui des figures 2A et 2B et comporte un élément de pincement 3, un élément de blocage 4, un élément de déformation 6, un élément de rappel 7 et une membrane 5. Il s'en différencie principalement par le fait que l'élément de rappel 7 est indépendant de l'élément de blocage 4.

Dans cet exemple, la cupule 2 comporte un filetage intérieur 25 et l'insert de diffusion 1 comporte un élément de blocage 4 en forme d'anneau, sensiblement similaire à celui de la figure 1 et pourvu d'un filetage extérieur 40 coopérant avec le filetage intérieur 25 de la cupule 2.

L'insert de diffusion 1 comporte un anneau de plaquage 90 formant l'élément de pincement 3 et l'élément de déformation 6. Les dimensions extérieures de l'anneau de plaquage 90 sont inférieures aux dimensions intérieures de l'ouverture 23 pour permettre l'insertion de l'anneau de plaquage 90 dans la cupule 2, par le dessus de la membrane 5 disposée au fond de la cupule 2.

Dans sa partie inférieure, l'anneau de plaquage 90 est pourvu d'un prolongement axial formant une couronne de déformation 31 définissant l'élément de déformation 6. Cette couronne de déformation 31 a un diamètre extérieur inférieur au diamètre intérieur de l'orifice axial 22 pour permettre son insertion dans l'orifice axial 22. De plus, la couronne de déformation 31 a une hauteur supérieure à l'épaisseur du retour 21. L'anneau de plaquage 90 est également pourvu d'une languette 7, flexible, formant l'élément de rappel 7, similaire à celle des figures 8A et 8B. Cette languette 7 est destinée à prendre appui sur la périphérie de la membrane 5 pour la plaquer contre la surface d'appui 24 et forme donc une surface de coincement 30 définissant l'élément de pincement 3. Cette languette 7 est déformable élastiquement entre un état « au repos » (représenté à la figure 3A) dans laquelle la zone de mesure 51 a une surface correspondant à la seconde surface rétractée ex-vivo SE2, et un état « fléchi » (représenté à la figure 3B) dans laquelle la zone de mesure 51 a une surface correspondant à la surface finale de mesure SF.

Pour coincer, tendre et déformer la membrane 5, on visse l'élément de blocage 4 dans la cupule 2. Ce vissage a pour effet de plaquer l'anneau de plaquage 90 contre la membrane 5 et de provoquer la déformation élastique de la languette 7 en élargissant la surface de coincement 30. Ce vissage a également pour effet de rapprocher la couronne de déformation 31 de la membrane 5. L'anneau de plaquage 90 étant disposé entre la membrane 5 et l'élément de blocage 4, l'élément de blocage 4 peut être vissé sans que la membrane 5 ne soit sollicitée en rotation.

Dans l'état « fléchi » de la languette 7, la membrane 5 est tendue par l'élargissant du diamètre de la surface de coincement 30 et déformée par l'appui de la couronne de déformation 31. La couronne de déformation 31, recouverte par la membrane 5, est la zone la plus basse de l'insert de diffusion 1 et est entourée par un dégagement latéral circulaire permettant l'évacuation spontanée d'une éventuelle bulle d'air formée sous la surface finale de mesure SF tendue de la membrane 5, fiabilisant l'interprétation des mesures comme décrit précédemment.

Comme pour l'insert de diffusion des figures 2A et 2B, la construction particulière de l'insert de diffusion 1 des figures 3A et 3B permet de pré-monter l'insert de diffusion 1 sans mettre la membrane 5 sous sa tension d'utilisation.

Selon une variante de réalisation non représentée, sensiblement similaire à celle des figure 3A et 3B, l'anneau de plaquage forme l'élément de pincement seulement, sans former l'élément de déformation. L'anneau de plaquage comporte, à cet effet, une languette élastiquement déformable, formant l'élément de rappel, dont l'extrémité inférieure définit la surface de coincement et dont l'extrémité supérieure est en appui contre l'élément de blocage. L'élément de blocage est pourvu d'un prolongement axial qui forme la couronne de déformation. Ce prolongement axial traverse le diamètre intérieur de la languette élastique afin de prendre appui sur la membrane et de la déformer. L'utilisation de cet insert de diffusion est sensiblement similaire à celle de l'insert de diffusion 1 des figures 3A et 3B.

Les inserts de diffusion 1 décrits ont globalement des formes cylindriques. Il est bien entendu que ces inserts de diffusion 1 peuvent avoir toute autre forme.

Les inserts de diffusion 1 selon l'invention permettent donc de préparer, en temps masqué, des échantillons de membrane, par exemple cutanée, à analyser. Ils permettent donc un gain de temps notable. De plus, en supprimant le risque de bulle d'air, ils fiabilisent de manière importante les mesures effectuées. Les membranes utilisées avec les kits de diffusion 1 peuvent bien entendu être de toute nature telle que des membranes cutanées reconstruites et des membranes biologiques d'autre nature provenant par exemple de l'intestin, de la cornée ou des muqueuses. Lorsqu'elles sont cutanées, les membranes peuvent provenir de zones anatomiques différentes et de donneurs différents.

Lorsqu'une mesure transmembranaire doit être réalisée, les inserts de diffusion 1 permettent d'effectuer directement l'analyse, sans temps d'attente pendant les étapes de préparation et de caractérisation de la membrane.

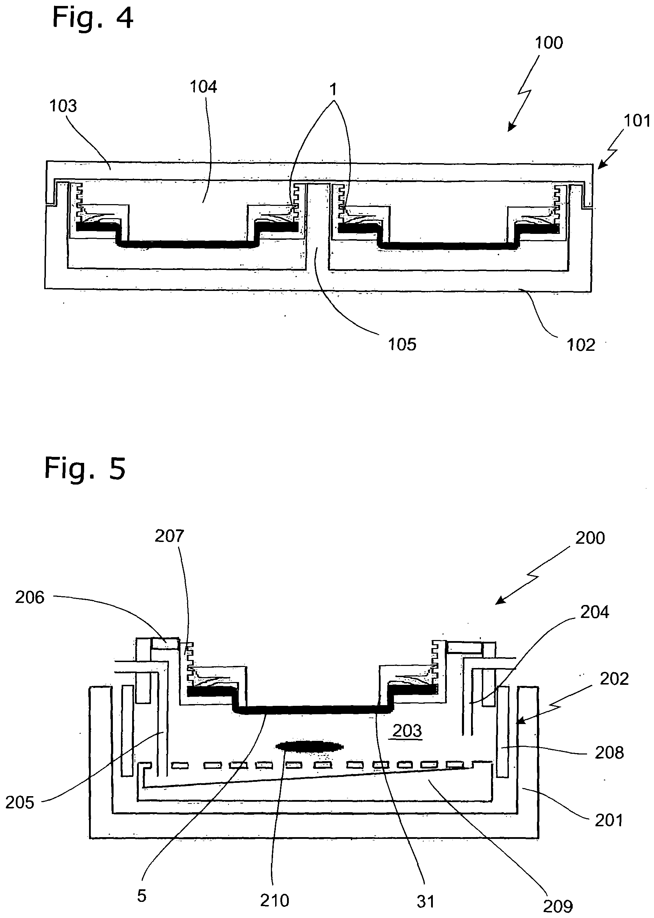

L'insert de diffusion 1 selon l'invention peut être transporté ou stocké dans un kit de diffusion 100 tel que celui représenté sur la figure 4. Dans cet exemple, le kit de diffusion 100 comporte un boitier 101 pourvu d'un fond 102 et d'un couvercle 103. Le fond 102 comporte un épaulement permettant au couvercle 103 de s'emboiter et de délimiter un logement de stockage 104 clos. Le boitier 101 a une forme générale parallélépipédique et comporte des cloisons longitudinales 105 (dont une seulement est représentée sur la figure 4) et transversales (non représentées). Ces cloisons délimitent des espaces de stockage individuels, par exemple six, dans chacun desquels un insert de diffusion 1 est placé. Les inserts de diffusion 1 peuvent ainsi être transportés et/ou stockés sans risque de détérioration. Le kit de diffusion 100 peut également être utilisé pour transporter des kits de diffusion 1 avant que les membranes 5 ne soient fixées dessus. Chaque boitier 101 peut avantageusement porter une étiquette (non représentée) sur laquelle sont résumées les données d'identification des kits de diffusion 1 qu'il contient. Cette étiquette est par exemple une étiquette autocollante. On indiquera par exemple sur cette étiquette la date de collecte de la membrane ; la zone anatomique de prélèvement de la membrane ; le phototype, l'âge, le sexe du donneur ; l'épaisseur, le diamètre, la mesure d'intégrité de la membrane ; la date limite d'utilisation recommandée ainsi qu'un code barre correspondant au kit de diffusion 100.

Dans une variante de réalisation non représentée, le boîtier comporte des entretoises, par exemple disposées sur le fond du boîtier et sur lesquelles les cupules des inserts de diffusion sont posées. Ces entretoises se présentent par exemple sous la forme d'anneau dont l'épaisseur est supérieure à la partie proéminente de la couronne de déformation de manière à préserver, sous chacune des membranes tendues, un espace libre. Les membranes ne risquent ainsi pas de frotter ou de toucher le fond du boîtier ce qui aurait pour effet de nuire à leur intégrité.

Dans une autre variante de réalisation non représentée, le couvercle du boîtier peut être articulé par rapport au fond du boîtier.

Les kits de diffusion 100 contenant des inserts de diffusion 1 peuvent être conservés de 6 à 12 mois à une température de - 20 °C. Ils permettent donc de conserver et de transporter, en toute sécurité, des inserts de diffusion 1 sans risquer de les dégrader. Ils permettent de plus de limiter la manipulation individuelle de chaque insert de diffusion 1, limitant d'autant les risques de détérioration et générant des gains de temps et de personnel.

Afin d'effectuer une mesure de pénétration transmembranaire, le kit de diffusion 1 peut être utilisé au sein d'une cellule de diffusion 200 telle qu'illustrée par la figure 5. Sur cette figure, le kit de diffusion 1 représentée correspond à celui de la figure 1. Il est bien entendu que d'autres variantes de kit de diffusion 1 peuvent être utilisées avec la cellule de diffusion 200 décrite ci-après.

La cellule de diffusion 200 comporte une enceinte 201, par exemple thermo régulée, dans laquelle est placé un compartiment récepteur 202 destiné à recevoir une solution réceptrice 203. La cellule de diffusion 200 comporte un conduit d'alimentation 204 et un conduit de prélèvement 205 plongés dans le conteneur récepteur 202 en deux endroits différents. Le conduit d'alimentation 204 permet d'alimenter le compartiment récepteur 202 avec la solution réceptrice 203 avant pénétration transmembranaire. Le conduit de prélèvement 205 permet de prélever tout ou partie de la solution réceptrice 203 après pénétration transmembranaire. La cellule de diffusion 200 peut être utilisée en statique, à savoir dans un premier temps en alimentant la solution réceptrice 203 avant pénétration transmembranaire et dans un second temps en prélevant la solution réceptrice 203 après pénétration transmembranaire. La présence simultanée du conduit d'alimentation 204 et du conduit de prélèvement 205 permet également d'utiliser la cellule de diffusion 200 en dynamique, à savoir une alimentation et un prélèvement continus de la solution réceptrice 203 pendant la pénétration transmembranaire.

Dans une autre variante de réalisation non représentée, la cellule de diffusion ne comporte qu'un seul conduit servant successivement à l'alimentation et au prélèvement de la solution réceptrice. Dans ce cas, la cellule de diffusion sera utilisée en statique seulement.

Le compartiment récepteur 202 est délimité par des parois latérales 208 et un fond 209. Dans l'exemple représenté, le fond 209 est disposé de manière inclinée. Cette configuration particulière permet de définir une zone de profondeur maximale de la solution réceptrice 203 dans laquelle le conduit de prélèvement 205 est plongé afin de prélever, au mieux, les molécules issues de la pénétration transmembranaire. Ces molécules ont en effet tendance à couler dans la solution réceptrice 203.

Le compartiment récepteur 202 est avantageusement réalisé en matériau hydrophobe, transparent ce qui permet de voir aux travers de ses parois latérales 208 et à ces dernières de ne pas retenir la solution réceptrice 203.

La cellule de diffusion 200 comporte des moyens de fixation d'un insert de diffusion 1 permettant d'immerger la membrane 5 dans la solution réceptrice 203, ou au moins de mettre la membrane 5 au contact de la solution réceptrice 203, tout en préservant un espace libre latéral tangent au dégagement latéral de l'insert de diffusion 1. Dans l'exemple représenté, le compartiment récepteur 202 comporte un couvercle 206 pourvu d'une (ou de plusieurs) ouverture(s) couplée(s chacune) à un manchon 207 s'étendant verticalement vers l'intérieur du compartiment récepteur 202. Le manchon 207 a une forme et des dimensions adaptées pour recevoir un insert de diffusion 1. La paroi intérieure du manchon 207 peut comporter un repère permettant de régler la hauteur de positionnement de l'insert de diffusion 1 de sorte que la couronne de déformation 31 dépasse en dessous du manchon 207 pour préserver un espace libre latéral par lequel la bulle d'air éventuellement formée sous la membrane 5 peut s'évacuer spontanément.

Dans une variante de réalisation non représentée, le manchon est pourvu d'une butée basse jusqu'à laquelle l'insert de diffusion est enfoncé pour régler sa hauteur de positionnement.

Dans une variante de réalisation non représentée, le kit de diffusion est inséré dans le manchon formant les moyens de fixation de sorte que la couronne de déformation portant la membrane ne dépasse pas en dessous de l'extrémité libre du manchon. Dans ce cas, l'extrémité libre du manchon sera pourvue de fenêtres latérales. On insèrera le kit de diffusion jusqu'à ce que la couronne de déformation portant la membrane soit visible dans les fenêtres latérales. Ainsi, les fenêtres latérales définissent un espace libre latéral directement tangent au dégagement latéral ménagé par la couronne de déformation autour de la surface « utile » tendue de la membrane. Toute bulle d'air qui se serait formée sous la membrane peut ainsi s'évacuer spontanément par le biais du dégagement latéral et de l'espace libre latéral.

La cellule de diffusion 200 comporte avantageusement un agitateur, par exemple un doigt 210, plongé dans la solution réceptrice 203 et animé magnétiquement d'un mouvement de rotation permettant d'assurer, une agitation vigoureuse de la solution réceptrice 203.

Dans une variante de réalisation (non représentée) les moyens de fixation peuvent comporter un plateau porté par les parois latérales du compartiment récepteur, ce plateau étant pourvu d'une (ou de plusieurs) ouverture(s). La face supérieure du plateau reçoit l'appui de la périphérie des inserts de diffusion, dont la couronne de déformation portant la membrane est insérée dans l'ouverture de manière à être mise en contact avec la solution réceptrice et à ménager un espace libre latéral.

Dans une autre variante de réalisation non représentée, le fond du compartiment récepteur est couplé à des moyens de réglage permettant d'adapter sa hauteur et/ou son inclinaison. Dans le premier cas, la contenance du compartiment récepteur peut être adaptée à la quantité de solution réceptrice contenue dans la cellule de diffusion. Dans le second cas, l'inclinaison peut être modifiée. Il est décrit également une unité de diffusion (non représentée) comprenant plusieurs cellules de diffusion disposées de manière adjacente et permettant de réaliser des tests de pénétration transmembranaire en série. Cette cellule de diffusion comporte un réceptacle dans lesquelles les cellules de diffusion sont disposées. Chaque cellule de diffusion est individuellement raccordée par un conduit de prélèvement à un récipient de récupération. Ainsi, à chaque cellule de diffusion peut correspondre une série attitrée de mesures. Les cellules de diffusion peuvent être alimentées par un conduit d'alimentation unique comportant plusieurs têtes d'alimentation, chaque cellule de diffusion étant couplée à une tête d'alimentation.

Possibilités d'application industrielle

L'insert de diffusion, le kit de diffusion et la cellule de diffusion selon l'invention sont notamment destinés à être utilisés pour effectuer des analyses de pénétration dites pénétration transmembranaire sur des membranes que les inserts de diffusion servent à maintenir tendues pendant qu'une solution donneuse est appliquée sur la membrane. On analyse ensuite le temps de la pénétration de la solution donneuse et la solution ayant traversé la membrane. Les membranes utilisées peuvent être artificielles ou naturelles, biologiques ou non, cutanées ou non.

**Revendications**

1. Insert de diffusion (1) notamment pour le maintien d'une membrane (5), ledit insert de diffusion (1) comportant au moins une cupule (2) définissant un compartiment donneur (20) axial destiné à recevoir une solution donneuse, ladite cupule (2) ayant une forme globalement cylindrique pourvue d'un retour (21) radial dont la partie intérieure définit une surface d'appui (24) radiale apte à recevoir l'appui de la périphérie de ladite membrane (5) disposée dans ladite cupule (2), ledit retour (21) radial définissant au moins un orifice axial (22) cylindrique destiné à être obturé par la partie centrale de ladite membrane (5), ledit insert de diffusion (1) comportant au moins :

   - un élément de pincement (3) apte à être logé dans ladite cupule (2), au-dessus de ladite membrane (5) et à coopérer avec ladite cupule (2) pour pincer la périphérie de ladite membrane (5),
   - des moyens de blocage agencés pour bloquer au moins axialement ledit élément de pincement (3) par rapport à ladite cupule (2), et
   - un élément de déformation (6) comportant une surface de déformation (31) axiale apte à déformer ladite membrane (5) axialement et radialement et à coopérer avec ledit élément de pincement (3) pour tendre au moins radialement ladite membrane (5) par rapport à ladite surface de pincement (30), ledit élément de déformation (6) étant apte à coopérer avec ladite cupule (2) pour préserver un dégagement latéral radial directement tangent à ladite surface de déformation (31) dudit élément de déformation (6) recouvert de ladite membrane (5) tendue,
   - un élément de rappel (7) prévu entre ledit élément de pincement (3) et ledit élément de blocage (4), ledit élément de rappel (7) étant formé par une languette (7) inclinée par rapport à l'axe dudit insert de diffusion (1) et déformable élastiquement entre un état « au repos » dans lequel il ne tend pas à éloigner ledit élément de pincement (3) dudit élément de blocage (4) et un état « fléchi » dans lequel il tend à éloigner ledit élément de pincement (3) dudit élément de blocage (4) pour solliciter, déformer et tendre radialement ladite membrane (5) de manière contrôlée,
   - un anneau de plaquage (90) formant l'élément de pincement (3), l'élément de déformation (6) et l'élément de rappel (7), les dimensions extérieures de l'anneau de plaquage (90) étant inférieures aux dimensions intérieures de l'ouverture (23) de la cupule (2), dans sa partie inférieure, l'anneau de plaquage (90) est pourvu d'un prolongement axial formant une couronne de déformation (31) définissant l'élément de déformation (6), ladite couronne de déformation (31) ayant un diamètre extérieur inférieur au diamètre intérieur de l'orifice axial et une hauteur supérieure à l'épaisseur du retour (21), ainsi quand l'anneau de plaquage dans la position « d'utilisation »étant logé au fond de la cupule (2), la couronne de déformation (31) traverse l'orifice axial (22)

jusqu'à dépasser sous la cupule (2).

**2.** Insert de diffusion (1) selon l'une quelconque des revendications précédentes, **caractérisé en ce que** ladite cupule (2) et un élément de blocage (4) sont respectivement pourvus de formes d'emboîtement complémentaires (25, 40 ; 28, 32) destinées à coopérer entre-elles pour former lesdits moyens de blocage.

**3.** Insert de diffusion (1) selon la revendication 2, **caractérisé en ce que** lesdites formes d'emboîtement complémentaires (25, 40) sont choisies dans le groupe comprenant au moins un filetage extérieur (40) et un filetage intérieur (25) aptes à s'emboîter, au moins une nervure (32) et au moins une rainure (28) aptes à s'emboîter

**4.** Insert de diffusion (1) selon l'une quelconque des revendications 2 à 3, **caractérisé en ce que** ledit élément de blocage desdits moyens de blocage comportent est un anneau (4) logé dans ladite cupule (2).

**5.** Insert de diffusion (1) selon l'une quelconque des revendications 2 à 4, **caractérisé en ce que** ledit élément de pincement (3), ledit élément de blocage (4), ledit élément de déformation (6) et ledit élément de rappel (7) sont formés d'une pièce unique.

**6.** Kit de diffusion (100) comportant un boîtier (101) pourvu d'un fond (102) et d'un couvercle (103) aptes à se refermer l'un sur l'autre pour définir au moins un logement de stockage (104), **caractérisé en ce qu'**il contient, dans son logement de stockage (104), au moins un insert de diffusion (1) selon l'une quelconque des revendications précédentes, ledit boîtier (101) étant pourvu d'au moins une entretoise, apte à recevoir ladite cupule (2) de manière à préserver un espace libre entre ladite surface de déformation (27 ; 31) et ledit fond (102) dudit boîtier (101) .

**7.** Cellule de diffusion (200) notamment pour l'analyse de pénétration transmembranaire , ladite cellule de diffusion (200) comportant au moins un compartiment récepteur (202) destiné à recevoir une solution réceptrice (203), au moins un conduit (204, 205) relié audit compartiment récepteur (202), **caractérisée en ce qu'**elle comporte des moyens de fixation (207) d'au moins un insert de diffusion (1) selon l'une quelconque des revendications 1 à 5 et un insert de diffusion selon l'une quelconque des revendications 1 à 5 , lesdits moyens de fixation (207) étant agencés pour que ladite membrane (5) soit au moins en contact avec ladite solution réceptrice (203), ledit compartiment récepteur (202) et lesdits moyens de fixation (207) étant agencés pour ménager un espace libre latéral radial tangent audit dégagement latéral radial dudit insert de diffusion (1).

**8.** Cellule de diffusion (200) selon l'une quelconque des revendications 7 et 10, **caractérisée en ce qu'**elle comporte des moyens de réglage agencés pour adapter au moins l'espace séparant ledit fond (209) de ladite membrane (5) en fonction de la hauteur de solution réceptrice (203) contenu dans ledit compartiment récepteur (202) .

**9.** Cellule de diffusion (200) selon la revendication précédente, **caractérisée en ce que** le fond (209) dudit compartiment récepteur (202) est agencé pour présenter un profil incliné définissant une zone de profondeur maximale de ladite solution réceptrice (203) .

**10.** Procédé de mesure de la pénétration transmembranaire d'une membrane (5) au cours duquel on utilise un insert de diffusion (1) selon l'une quelconque des revendications 1 à 5 notamment pour tenir et tendre ladite membrane (5), **caractérisé en ce que** l'on choisit un /élément de rappel (7) en fonction de son coefficient dé rétraction $\alpha$(insert) et de ladite surface de déformation (27 ; 31) dudit élément de déformation (6).

**Patentansprüche**

**1.** Diffusionseinsatz (1), insbesondere zum Halten einer Membran (5), wobei der Diffusionseinsatz (1) mindestens einen Becher (2) umfasst, der eine axiale Donorkammer (20) definiert, die bestimmt ist zum Aufnehmen einer Donorlösung, wobei der Becher (2) eine global zylindrische Form aufweist, die mit einem radialen Ablauf (21) versehen ist, von dem der Innenteil eine radiale Unterstützungsoberfläche (24) definiert, die in der Lage ist, Unterstützung aufzunehmen von dem Randbereich der in dem Becher (2) angeordneten Membran (5), wobei der radiale Ablauf (21) mindestens eine axiale zylindrische Öffnung (22) definiert, die bestimmt ist, durch den mittleren Teil der Membran (5) verschlossen zu werden, wobei der Diffusionseinsatz (1) mindestens Folgendes umfasst:

- ein Klemmelement (3), das in der Lage ist, in dem Becher (2) oberhalb der Membran (5) untergebracht zu werden und mit dem Becher (2) zusammenzuwirken, um den Randbereich der Membran (5) zu klemmen,

- Blockiermittel, angeordnet um das Klemmelement (3) bezüglich des Bechers (2) mindestens axial zu blockieren, und

- ein Deformationselement (6), umfassend eine axiale Deformationsoberfläche (31), die in der Lage ist, die Membran (5) axial und radial zu deformieren und mit dem Klemmelement (3) zusammenzuwirken, um die Membran (5) bezüglich der Klemmoberfläche (30) mindestens radial zu spannen, wobei das Deformationselement (6) in der Lage ist, mit dem Becher (2) zusammenzuwirken, um einen seitlichen radialen Abstand zu bewahren, der die Deformationsoberfläche (31) des von der gespannten Membran (5) bedeckten Deformationselements (6) direkt tangiert,

- ein Rückstellelement (7), vorgesehen zwischen dem Klemmelement (3) und dem Blockierelement (4), wobei das Rückstellelement (7) durch eine Lasche (7) gebildet wird, die bezüglich der Achse des Diffusionseinsatzes (1) geneigt ist und zwischen einem Zustand « in Ruhe », in dem es nicht dazu neigt, das Klemmelement (3) von dem Blockierelement (4) weg zu bewegen, und einem « durchhängenden » Zustand, in dem es dazu neigt, das Klemmelement (3) von dem Blockierelement (4) weg zu bewegen, um die Membran (5) auf kontrollierte Weise radial zu belasten, zu deformieren und zu spannen, elastisch deformierbar ist,

- einen das Klemmelement (3), das Deformationselement (6) und das Rückstellelement (7) bildenden Greifring (90), wobei die Außenabmessungen des Greifrings (90) kleiner sind als die Innenabmessungen der Öffnung (23) des Bechers (2), wobei der Greifring (90) an seinem unteren Teil mit einer axialen Verlängerung ausgestattet ist, die eine Deformationskrone (31) bildet, die das Deformationselement (6) definiert, wobei die Deformationskrone (31) einen Außendurchmesser aufweist, der kleiner ist als der Innendurchmesser der axialen Öffnung und eine Höhe, die größer ist als die Dicke des Ablaufs (21), damit, wenn der Greifring in der Position « Anwendung » am Boden des Bechers (2) untergebracht ist, die Deformationskrone (31) die axiale Öffnung (22) bis zum Überschreiten unter den Becher (2) durchquert.

2. Diffusionseinsatz (1) nach einem der vorhergehenden Ansprüche, **dadurch gekennzeichnet, dass** der Becher (2) und ein Blockierelement (4) jeweils mit komplementären Verschachtelungsformen (25, 40; 28, 32) versehen sind, die dazu bestimmt sind, untereinander zusammenzuwirken, um die Blockiermittel zu bilden.

3. Diffusionseinsatz (1) nach Anspruch 2, **dadurch gekennzeichnet, dass** die komplementären Verschachtelungsformen (25, 40) gewählt sind aus der Gruppe, umfassend mindestens ein Außengewinde (40) und ein Innengewinde (25), die in der Lage sind, ineinander gesteckt zu werden, mindestens eine Rippe (32) und mindestens eine Rille (28), die in der Lage sind, ineinander gesteckt zu werden.

4. Diffusionseinsatz (1) nach einem der Ansprüche 2 bis 3, **dadurch gekennzeichnet, dass** das Blockierelement der Blockiermittel ein in dem Becher (2) untergebrachter Ring (4) umfassen ist.

5. Diffusionseinsatz (1) nach einem der Ansprüche 2 bis 4, **dadurch gekennzeichnet, dass** das Klemmelement (3), das Blockierelement (4), das Deformationselement (6) und das Rückstellelement (7) aus einem einzelnen Stück gebildet sind.

6. Diffusionskit (100), umfassend eine Schachtel (101) versehen mit einem Boden (102) und einem Deckel (103), die in der Lage sind, sich gegenseitig zu verschließen, um mindestens ein Aufbewahrungsfach (104) zu definieren, **dadurch gekennzeichnet, dass** es in seinem Aufbewahrungsfach (104) mindestens einen Diffusionseinsatz (1) nach einem der vorhergehenden Ansprüche enthält, wobei die Schachtel (101) mit mindestens einem Abstandshalter versehen ist, der in der Lage ist, den Becher (2) auf eine Weise aufzunehmen, um einen freien Raum zwischen der Deformationsoberfläche (27; 31) und dem Boden (102) der Schachtel (101) zu bewahren.

7. Diffusionszelle (200), insbesondere zur Analyse von transmembranärer Penetration, wobei die Diffusionszelle (200) mindestens eine Rezeptorkammer (202) umfasst, die zum Aufnehmen einer Rezeptorlösung (203) bestimmt ist, mindestens einen Kanal (204, 205), der mit der Rezeptorkammer (202) verbunden ist, **dadurch gekennzeichnet, dass** sie Befestigungsmittel (207) von mindestens einem Diffusionseinsatz (1) nach einem der Ansprüche 1 bis 5 und einen Diffusionseinsatz nach einem der Ansprüche 1 bis 5 umfasst, wobei die Befestigungsmittel (207) angeordnet sind, damit die Membran (5) mit mindestens der Rezeptorlösung (203) in Kontakt steht, wobei die Rezeptorkammer (202) und die Befestigungsmittel (207) angeordnet sind, um einen seitlich radialen Freiraum, tangential zum seitlichen radialen Abstand des Diffusionseinsatzes (1), zu schaffen.

8. Diffusionszelle (200) nach einem der Ansprüche 7 und 10, **dadurch gekennzeichnet, dass** sie Einstellungsmittel umfasst, die angeordnet sind, um mindestens den Raum, der den Boden (209) von der Membran (5) als Funktion der Höhe von der in der Rezeptorkammer (202) enthaltenen Rezeptorlösung (203) trennt, einzustellen.

9. Diffusionszelle (200) nach dem vorhergehenden Anspruch, **dadurch gekennzeichnet, dass** der Boden (209) der Rezeptorkammer (202) angeordnet ist, um ein geneigtes Profil vorzuweisen, das einen Bereich maximaler Tiefe der Rezeptorlösung (203) definiert.

10. Verfahren zum Messen der transmembranären Penetration einer Membran (5), in dessen Verlauf ein Diffusionseinsatz (1) nach einem der Ansprüche 1 bis 5 verwendet wird, insbesondere um die Membran (5) zu halten und zu spannen, **dadurch gekennzeichnet, dass** man ein Rückstellelement (7) in Funktion seines Rückzugkoeffizienten $\alpha$(Einsatz) und der Deformationsoberfläche (27; 31) des Deformationselements (6) wählt.

**Claims**

1. Diffusion insert (1), in particular for maintaining a membrane (5), said diffusion insert (1) comprising at least one cup (2) defining an axial donor compartment (20) intended to receive a donor solution, said cup (2) having a generally cylindrical shape provided with a radial return (21), the inner portion of which defines a radial bearing surface (24) suitable for the periphery of said membrane (5) placed in said cup (2) to bear thereon, said radial return (21) defining at least one cylindrical axial orifice (22) intended to be closed by the central portion of said membrane (5), said diffusion insert (1) comprising at least:

   - a clamping element (3) suitable for being housed in said cup (2), above said membrane (5), and for cooperating with said cup (2) in order to clamp the periphery of said membrane (5),
   - blocking means arranged to block said clamping element (3) with respect to said cup (2) at least axially, and
   - a deformation element (6) comprising an axial deformation surface (31) suitable for deforming said membrane (5) axially and radially and for cooperating with said clamping element (3) in order to stretch said membrane (5) at least radially with respect to said clamping surface (30), said deformation element (6) being suitable for cooperating with said cup (2) in order to preserve a radial lateral clearance directly tangent to said deformation surface (31) of said deformation element (6) covered by said stretched membrane (5),
   - a return element (7) provided between said clamping element (3) and said blocking element (4), said return element (7) being formed by a tab (7) inclined with respect to the axis of said diffusion insert (1) and being elastically deformable between a "rest" state in which it does not tend to move said clamping element (3) away from said blocking element (4) and a "bent" state in which it tends to move said clamping element (3) away from said blocking element (4) in order to stress, deform and radially stretch said membrane (5) in a controlled manner,
   - a pressing ring (90) forming the clamping element (3), the deformation element (6) and the return element (7), the outer dimensions of the pressing ring (90) being smaller than the inner dimensions of the opening (23) of the cup (2), in its lower portion, the pressing ring (90) is provided with an axial extension forming a deformation ring (31) defining the deformation element (6), said deformation ring (31) having an outer diameter smaller than the inner diameter of the axial orifice and a height greater than the thickness of the return (21), thus when the pressing ring in the "use" position being housed at the bottom of the cup (2), the deformation ring (31) passes through the axial orifice (22) until it extends under the cup (2).

2. Diffusion insert (1) according to any one of the previous claims, **characterised in that** said cup (2) and a blocking element (4) are respectively provided with complementary interlocking shapes (25, 40; 28, 32) intended to cooperate with each other in order to form said blocking means.

3. Diffusion insert (1) according to claim 2, **characterised in that** said complementary interlocking shapes (25, 40) are chosen from the group comprising at least an outer thread (40) and an inner thread (25) suitable for fitting together, at least one rib (32) and at least one groove (28) suitable for fitting together

4. Diffusion insert (1) according to any one of claims 2 and 3, **characterised in that** said blocking element of said blocking means comprise is a ring (4) housed in said cup (2).

5. Diffusion insert (1) according to any one of claims 2 to 4, **characterised in that** said clamping element (3), said blocking element (4), said deformation element (6) and said return element (7) are formed from a single piece.

6. Diffusion kit (100) comprising a case (101) provided with a bottom (102) and a cover (103) suitable for being closed one on the other in order to define at least one storage housing (104), **characterised in that** it contains, in its storage housing (104), at least one diffusion insert (1) according to any one of the previous claims, said case (101) being provided with at least one spacer, suitable for receiving said cup (2) in such a way as to preserve a free space between said deformation surface (27; 31) and said bottom (102) of said case (101).

7. Diffusion cell (200) in particular for transmembrane penetration analysis, said diffusion cell (200) comprising at least one receiving compartment (202) intended to receive a receiving solution (203), at least one duct (204, 205) connected to said receiving compartment (202), **characterised in that** it comprises means (207) for fastening at least one diffusion insert (1) according to any one of claims 1 to 5 and a diffusion insert according to any one of claims 1 to 5, said fastening means (207) being arranged in order for said membrane (5) to be at least in contact with said receiving solution (203), said receiving compartment (202) and said fastening means (207) being arranged in order to create a radial lateral free space tangent to said radial lateral clearance of said diffusion insert (1).

8. Diffusion cell (200) according to any one of claims 7 and 10, **characterised in that** it comprises adjustment means arranged in order to adapt at least the space separating said bottom (209) from said membrane (5) according to the height of receiving solution (203) contained in said receiving compartment (202) .

9. Diffusion cell (200) according to the previous claim, **characterised in that** the bottom (209) of said receiving compartment (202) is arranged in order to have an inclined profile defining a zone of maximum depth of said receiving solution (203).

10. Method for measuring the transmembrane penetration of a membrane (5), during which a diffusion insert (1) according to any one of claims 1 to 5 is used in particular to hold and stretch said membrane (5), **characterised in that** a return /element (7) is chosen according to its coefficient of retraction $\alpha$ (insert) and said deformation surface (27; 31) of said deformation element (6).

# Fig. 1A

# Fig. 1B

# Fig. 1C

# Fig. 1D

Fig. 2A

Fig. 2B

## Fig. 3A

## Fig. 3B

## Fig. 4

## Fig. 5

**EP 2 485 829 B1**

## RÉFÉRENCES CITÉES DANS LA DESCRIPTION

**Documents brevets cités dans la description**

- EP 0596482 A
- US 2005063862 A
- US 621772 A
- WO 2004029338 A
- WO 2004086004 A

**Littérature non-brevet citée dans la description**

- **FRANZ T.J.** *J Invest Dematol,* 1975, vol. 64, 190-195